Europäisches Patentamt

European Patent Office

Office européen des brevets

(11) Publication number: **0 232 743 B1**

# EUROPEAN PATENT SPECIFICATION

(45) Date of publication of patent specification: 24.04.91   (51) Int. Cl.5: **B23K 3/00**

(21) Application number: **87100464.4**

(22) Date of filing: **15.01.87**

(54) Automatic solder machine.

(30) Priority: **17.01.86 US 820437**
            **29.10.86 US 925502**

(43) Date of publication of application:
**19.08.87 Bulletin  87/34**

(45) Publication of the grant of the patent:
**24.04.91 Bulletin  91/17**

(84) Designated Contracting States:
**AT BE CH DE ES FR GB GR IT LI LU NL SE**

(56) References cited:
**US-A- 2 701 291**
**US-A- 3 357 621**

**PATENT ABSTRACTS OF JAPAN, vol. 9, no.
14 (M-352)[1737], 22nd January 1985; & JP - A
- 59 163 072 (MATSUSHITA DENKI-SANGYO
K.K.) 14-09-1984**

**PATENT ABSTRACTS OF JAPAN, vol. 8, no.
158 (M-311)[1595], 21st July 1984; & JP - A -
59 54462 (NIHON INTERNATIONAL
SEIRIYUUKI K.K.) 29-03-1984**

(73) Proprietor: **Ono, Harry
1890 Big Ben Drive
Des Plaines Illinois 60016(US)**

Proprietor: **Hieshima, Howard
7432 North Wolcott
Chicago Illinois 60626(US)**

Proprietor: **Meixner, Robert
5409 Harvard Terrace
Skokie Illinois 60077(US)**

(72) Inventor: **Ono, Harry
1890 Big Ben Drive
Des Plaines Illinois 60016(US)**
Inventor: **Hieshima, Howard
7432 North Wolcott
Chicago Illinois 60626(US)**
Inventor: **Meixner, Robert
5409 Harvard Terrace
Skokie Illinois 60077(US)**

(74) Representative: **Hoormann, Walter, Dr.-Ing. et
al
FORRESTER & BOEHMERT Widenmayer-
strasse 4/I
W-8000 München 22(DE)**

PATENT ABSTRACTS OF JAPAN, vol. 9, no. 7
(M-350)[1730], 12th January 1985; & JP - A -
59 156 572 (MITSUBISHI DENKI K.K.)
05-09-1984

## Description

The present invention relates to an automatic soldering apparatus according to the precharacterizing clause of claim 1. More particularly, the invention relates to an automatic soldering machine useable for assembly operations of components such as PC boards, electrical terminals, and the like.

A number of attempts to develop an automatic spot soldering equimpent have been made in the past, but these attempts have not been entirely successful. Several different operations must be handled in the correct order, and in the correct timing, and the apparatus available in the past has not successfully integrated all of the required operations.

From US-A-3 357 621 there is known an apparatus comprising a solder guide which is rigidly fixed. Thus, the guide always remains in close proximity to the soldering iron, with the result that it becomes heated by the soldering iron. If this heat becomes excessive, melted solder occures within the guide, and even if that condition does not arise, the temperature of the guide, and the solder therein, increases with continued operation of the apparatus, evidentely causing erratic results due to the non-uniform temperature of the solder.

In US-A-2 701 291 there is disclosed a soldering apparatus comprising two electrodes. The heat necessary to melt the solder is provided by an electric current passing through the first electrode, the work piece and the second electrode.

The object underlying the invention is to provide an improved automatic soldering apparatus, in which all the necessary operations are carried out with the correct sequence and timing and which is simply in construction. Said object is aimed by an apparatus according to claim 1.

Preferred embodiments of the invention are claimed in the subclaims.

In operation, the components work together in sequence and in cooperation to provide solder joints with maximum efficiency.

In one embodiment an apparatus is provided for controlling the soldering iron spindle velocity and pressure, using a spring loaded solder tip spindle that is free of friction and adjustable in pressure to provide a fast consistent motion of the solder iron. A linkage arrangement for the movement of a solder wire guide tube provides an accurate method for transferring the solder from the preformer position to the soldering position, pivoting about a feed mechanism pivot location to minimize inertial forces and to permit a faster cycle time. A feed roller pressure mechanism permits the use of a pair of smooth, round elastomer rollers. A clutch mechanism which is light weight provides forward, reverse and neutral movements, whith adjustments for the solder supply stroke lenghts. An oscillator for the solder tip spindle provides agitation of the molten solder, to improve distribution and adhesion of the solder on the work pieces. A short cycle mode of operation is provided, which allows rapid multiple cycles for soldering of multiple positions in rapid sequences.

Reference will now be made to the accompanying drawings in which:
FIG. 1 is a diagrammatic illustration of a preferred embodiment of the present invention;
FIG. 2 is a vertical cross-sectional view of a portion of the apparatus of FIG. 1; and
FIG. 3 is a functional block diagram of a control system used with the invention.

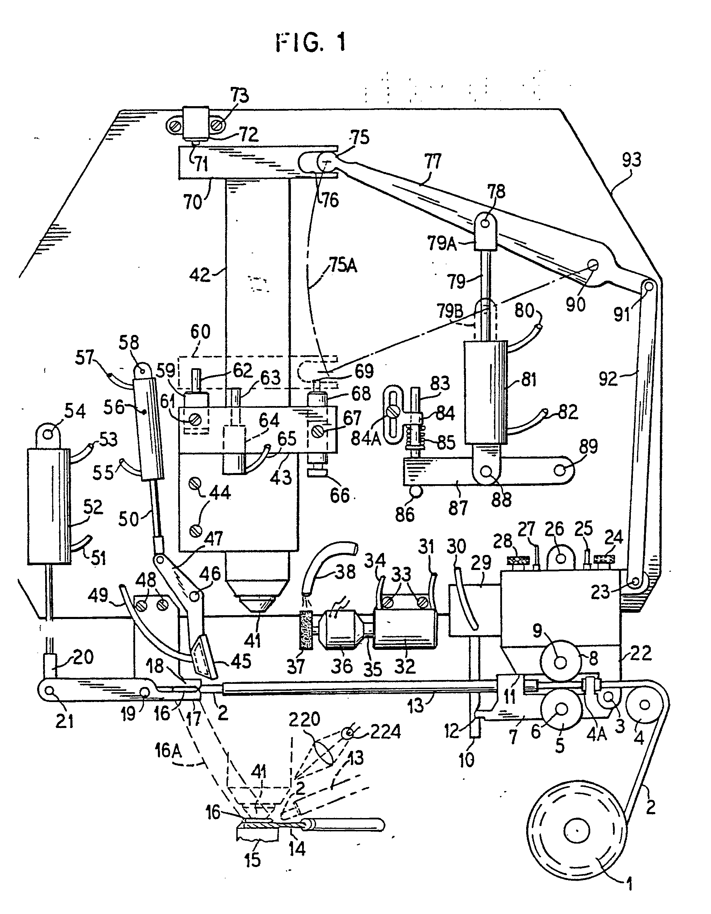

Referring now to FIG. 1, a wire 14 to be soldered to a terminal strip 15 or the like, is illustrated with a pellet of solder 16 which has been preformed from the end of the solder wire 2 prior to the downward movement of the solder tip 41.

The solder tip 41 is mounted on a spindle 42, and supported to move vertically, guided by spindle bearing block 43, which in turn is mounted on the machine frame 93 with two bolts 44.

The top end of the spindle 42 contains a rigidly attached cross plate 70, having a groove 76 to engage the end 75 of an actuating lever 77. The actuating lever 77 is pivotally mounted by a shaft 90 onto the frame 93.

A double acting air cylinder piston 79 is connected to the lever 77 by means of a pivot pin 78. The air cylinder 81 is connected to a cross lever 87 which is pivotally mounted to frame 93 via a shaft 89.

The lever 87 rests on a stop pin 86, and is depressed downward by a spring plunger 83. The spring 85 is compressed by the bracket 84, which is adjustably mounted onto a frame 93 with a bolt 84A.

The feeder block 22 is pivotally mounted to the frame 93 by a shaft 26, and is connected to the actuating lever 77 with a tie rod 92.

The upper feed roller 8 is mounted on a shaft 9 which is rotatably mounted on a feeder block 22. A lower feeder assembly plate 7 is hinged onto feeder block 22 with a cross shaft 3.

The lower feed roll 5' is mounted onto a shaft 6 which is rotatably mounted on a feeder assembly plate 7. Feed roll shafts 6 and 9 are connected with a pair of gears (not shown) which rotate both rollers 5 and 8 in unison.

Also mounted on the plate 7 are a solder guide tube 13 and a latch 12, which engages a notch in the piston shaft 10 of air cylinder 29, to provide the clamping force for the feed rollers 5 and 8.

The air cylinder 29 is a single acting unit mounted on the feeder block 22.

The air cylinder 32 is mounted on the frame 93 with two bolts 33. The piston rod 35 of this cylinder functions as a mount for an electric motor 36. A brush 37 is mounted onto the shaft of the electric motor 36, and is rotated by the motor.

A solder tip cover 45 is pivotally mounted onto the frame 93 by a shaft 46 mounted on the frame 93. This cover 45 is actuated with a double acting air cylinder 56, which is mounted on the frame 93 by a pivotal shaft 58. A nitrogen supply hose 49 is connected to the cup 45, to furnish nitrogen or other inert gas to the cup.

A preformer upper jaw 18 is mounted on the frame 93 with two bolts 48. A lower jaw 17 is pivotally mounted onto the upper jaw plate 18 via a shaft 19. The lower jaw 17 is connected to the piston rod 20 of a double acting air cylinder 52 with a pin 21. The air cylinder 52 is pivotally supported by the frame 93 with a shaft 54.

The spindle bearing block 43 also functions as a mount for hydraulic dampers 59 and 68 and for a vibrator or oscillator 64.

Another hydraulic damper 72, which is mounted onto frame 93 with bolts 73 and bears on the upper arm 70 of the spindle, cushions the spindle assembly 42 at the end of its upward motion.

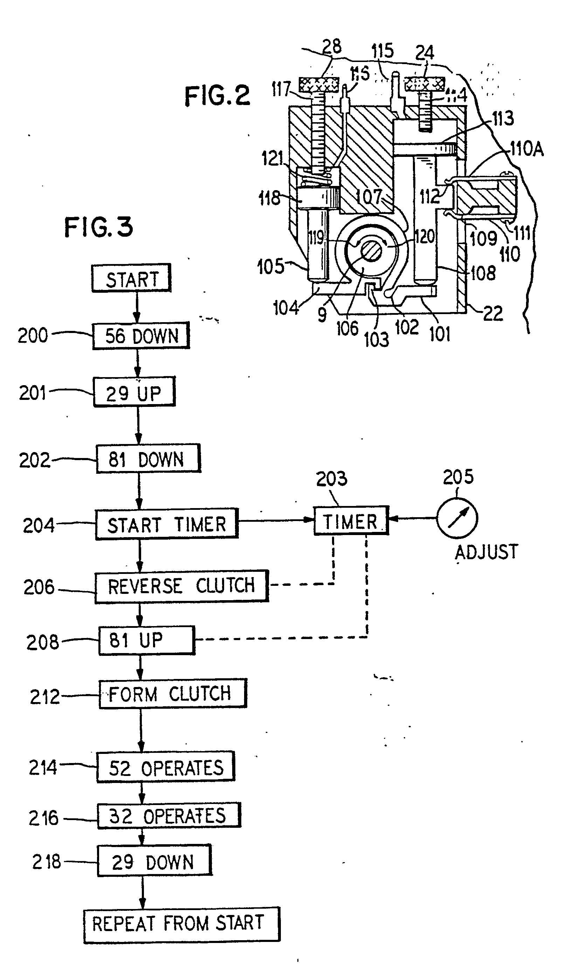

As shown in FIG. 2, a drive mechanism for the feed roll shaft 9, which rotates the feed roll 8, is illustrated. The drive has forward, reverse and neutral movements with means for adjusting the reverse and forward rotation.

A clamping ring 107 is circumferentially positioned surrounding the periphery of a disk 106, which is rigidly attached to the roller feed shaft 9. A small clearance is provided between the clamping ring 107 and the disk 106. This clearance allows the shaft 9 to freely rotate whenever pistons 118 and 113 are non-pressurized, i.e., in their upper positions.

Pistons 118 and 113 have piston rods 105 and 106 which are in contact with levers 104 and 101. The levers 104 and 101 are rigidly connected with the ring 107, and are preferably integrally formed therewith. Piston 113 has a lobe 112 which is in contact with springs 110 and 110A. The springs 110 and 110A are rigidly mounted on housing 22 and rest on a stop 109.

An interlocking tongue and groove 103 formed as part of the ring 107 is positioned to provide a clamping action when levers 104 and 101 are slightly deflected downwardly. The narrow section 102 on ring 107 is positioned to allow the part 101 to pivot as a lever about the right hand side of the spring 107, so as to amplify the force applied to the lever 101, and tighten the ring into engagement with the disk 106.

A pair of stops 114 and 117 are attached to external knobs 28 and 24, whereby the positions of the stops are adjustable.

Air supply lines 115 and 116 actuate the pistons 113 and 118.

A set of conventional solenoid-operated pneumatic valves (not shown) provide pressurized air to the various cylinders in the proper sequence for the appropriate durations. These valves are electrically controlled by a conventional controller unit which is readily available.

The operation of the apparatus may be initiated by means of a signal developed by a foot pedal or a manually operated switch. The signal is supplied to the controller, so that the sequence can begin.

When the cycle initiates, the cover 45 is opened, under control of the air cylinder 56. This uncovers the soldering iron tip 41. Then the spindle 42 moves downwardly, under the control of the air cylinder 81, through the lever arm 77 and the yoke 76. When the cross-plate 70 reaches the damper 59, the downward motion of the spindle is slowed, by action of the damper, and when the block 70 reaches a position of the damper 68, it is further slowed by means of the damper 68. The dampers 59 and 68 supply a two stage damping, which is effective to decelerate the rapid downward motion of the soldering iron, so that it is lowered very slowly at the location where it contacts the solder, at the position of the solder joint.

The solder tip 41 presses against the solder pellet 16, supplying heat to it and heat to the parts 14 and 15 which are being soldered.

The solder tip 41 rests against the joint to be soldered for a predetermined time, as controlled by the controller.

While the solder tip remains at its lower position, pressing the solder against the joint to be soldered, the feed rolls 5 and 8 are energized, to retract the solder wire 2, causing the pellet 6 to break off the end of the solder wire. The soldering iron is maintained in this lower position for a time sufficient to complete the soldered joint. During this period, the vibrator 64 vibrates the spindle vertically through an actuator arm 63 bearing on the block 70. The vibrator is powered by an air pressure source through a line 65. The vibration agitates the solder, through the soldering iron tip 41, to encourage the solder to flow into the joint being soldered.

After the solder pellet has been broken off, the spindle 42 and interconnected feeder assembly, containing the solder wire feeder tube 13, rapidly pivots upwardly, and is then slowed to a stop by the hydraulic damper 72. Simultaneously, the feed rolls 5 and 8 return to their original position, and then feed forward a predetermined length of solder wire to form the pellet 16 for the next soldering operation.

When the spindle 42 returns to its uppermost position, three operations take place simultaneously. Firstly, the preformer jaws 17 and 18, which had been in the open position, are closed. Secondly, a drop of solvent is applied from a tube 38 onto the rotating brush 37, after which the rotating brush 37 moves forward past the hot soldering iron tip 41, and then returns. Also the cover 45 closes, and the nitrogen flowing through the tube 49 displaces any air from the tip 41, preventing it from oxidizing.

At this point the cycle described above may be repeated. It is understood that between cycles, a positioning device positions a new solder joint at the lower position of the soldering iron 41, so that it is in position at the time as the lowering soldering iron reaches that location.

The normal cycle of operation, described above, requires approximately 0.7 second. However, many solder joints may be indexed into position as fast as 0.1 second. Therefore, for operations involving rapid indexing, manufacturing production rates can be substantially increased by using a shorter cycle. In addition, some soldering locations require more solder than can be provided with a single feed cycle. In this case, the work piece may be held stationary while the apparatus is run through two or more cycles, supplying a greater quantity of solder to the joint.

To accommodate more rapid cycling, a short cycle is provided in which the sequence of operations is as follows.

Starting with the soldering iron 41 in its down position, and after the work piece has been wetted with solder, the spindle 42 then moves upwardly for an adjustable time interval, and immediately after the spindle starts up, the feeder feeds out a predetermined length of solder. The delay between the upward movement of the spindle and the operation of the feeder may be, for example, 20 milliseconds. Then the spindle moves downwardly, after the solder has been fed out, and the soldering iron 41 then melts the projecting end of the solder wire 2 and then the retract operates in order to withdraw the unmelted solder wire from the soldering location. The spindle 42 stays in its downward position, until the solder is melted out into the solder joint. Then the operation is repeated for the next solder joint to be formed. The time required for a typical short cycle is on the order of 0.2 seconds.

In order to reduce the cycle time of the apparatus to a minimum, the inertia of the spindle 42 and of the feeder assembly 22 must be kept to a minimum. This allows a high velocity to be achieved. The primary damper 59, which slows the downward movement of the spindle 42, is normally not compatible with the pressure and velocity required at the final approach of the soldering iron tip 41 to the joint to be soldered. This is because the final movement, during melt down of the solder pellet 16, is more precise than can be accommodated by a single damper. Accordingly, the second damper 68, which is adjustable in its damping effect, is positioned to control the final 3.175 mm (1/8 inch) movement of the spindle 42. In this way, the movement of the spindle 42 is controlled so as to accurately approach and melt the solder pellet to form the solder joint.

Quite often the solder tip 41 presses on the solder pellet 16 (or solder wire end) at an angle, or with a horizontal force perpendicular to the axis of the solder wire 2. This causes the solder wire supply 2 to bend laterally at some point between the solder tip 41 in the down position and the end of the solder wire guide tube 13. If this lateral bend is not straightened out, the lateral position of the solder pellet will be shifted away from the desired position on the next cycle. By providing a close fitting solder guide tube 13 and sufficient pull back movement, the solder wire end 2 is straightened out during each cycle.

To provide the high reverse acceleration for retraction of the solder wire, the low inertia, high force reversible clutch mechanism is provided (FIG. 2). The inertial components of this mechanism are limited to a single friction ring and two pistons.

A fast reversal requires good traction of the feed rolls 5 and 8 on the solder wire 2, and accordingly, the feed rolls 5 and 8 are constructed of high friction elastomer. Soldering alloys will cold flow and flatten if left under even light pressure between the feed rolls 5 and 8. Therefore, the air cylinder 29, actuated by air line 30, is installed to close and clamp the feed rolls 5 and 8 only during actual periods of forward or reverse motion. Previous attempts to eliminate the cold flow problem have employed the use of serrated drive wheels or other devices which have been unsatisfactory because they undesirably score or deform the solder wire.

A fast reversal motion develops into a high reverse velocity which must be terminated. Although the reverse movement is small, the velocity of the retracting solder wire 2 is great enough to cause shaving of the solder wire 2 surface due to the stopping force required, if serrated rollers were to be used. Any slippage of the solder wire 2 in a feed mechanism causes inaccuracies of the feed length. Therefore, the feed mechanism requires stopping forces substantially higher than the driving (acceleration) forces, and is accommodated by the mechanism of FIG. 2.

A forward feed cycle of the mechanism of FIG. 2 consists of actuating pistons 118 and 113 simultaneously through air lines 115 and 116. The piston rods 105 and 108 apply a deflection on the levers 104 and 101, which causes a pivotal lever action of the tongue and groove by deflection at point 102. This action decreases the circumference of ring 107 and creates a high friction force on drive disk 106. Since the piston 113 is larger than the piston 118, the differential force becomes the net output torque of shaft 9, which in this sequence rotates shaft 9 in the clockwise direction 120. The release of air pressure on piston 118 first (and then piston 113) allows the pistons 113 and 118 and ring 107 to return to the neutral position, with no further rotation of the shaft 9. The return motion is provided by springs 110 and 121.

At the termination of the forward rotation 120, all of the components are moving at a high velocity. This movement is terminated with an impact of the piston 118 against a stop 117. The high deceleration force required to stop the rotation of disk 106, shaft 9, and the rollers 5 and 8 is provided by the inertia of the piston 113 and the rod 108 which impacts against level 101. The friction force of the ring 107 to disk 106 at the instant of impact is many times greater than the normal accelerating friction force.

The reverse motion requires actuation of the piston 118 with compressed air through a hose 116. The pressure on the lever 101 for the clamping action of the ring 107 is provided by the spring 110A, which also returns the piston 113 to its neutral position. The clamping action is maintained throughout the reverse rotation 119, and subsequent return to the normal position, due to the back pressure of the air exhausting out of piston 118. The deceleration on the reverse motion is with an impact on the adjustable stop 114, which provides a high friction force as described on the forward motion.

In the neutral position the disk 106 and shaft 9 are disengaged from ring 107. This allows hand rotation of feed rollers 5 and 8 for set-ups and threading of new spools of solder wire 2.

The entire feeder assembly of FIG. 2 is pivotally mounted on the plate 93 by a shaft 26. By locating the pivot shaft 26 of the entire assembly, the inertial loads for fast cycling are minimized. The location of the shaft 26 is also essential for minimizing the length of push and pull of the wire 2 out of spool 1 when the feed assembly oscillates through a cycle.

The inertial effects of a rotating body (such as the feeder assembly) is a function of the square of the radius. Therefore, in consideration of the inertial effects and the push-pull action of the wire supply 2, it is desirable to locate the pivot 26 close to the feed rolls 5 and 8 and within 50% of the length from the feed rolls 5 and 8 and jaws 17 and 18.

The feeder housing 22 (and associated assembly) is connected to synchronously oscillate with the spindle 42, by means of a tie rod 92. By mechanically interlocking both movements, in contrast to an independently powered feeder assembly, a substantial simplification of the movement mechanisms, and a faster cycle time is made possible.

After the solder pellet 16 melts out, the solder tip 41 sits on a pool of molten solder until the work pieces 14 and 15 are wet out. During this interval, contaminants such as air bubbles, oxides, excess flux, amalgamates, etc. can interfere with the flow of the molten solder 16 and the heat transfer of the heat from the solder tip 41 to the work pieces 14 and 15. It is desirable at this time to agitate the molten solder 16 and the work pieces 14 and 15 to allow the contaminants to move and work their way out of the solder joint area.

The spindle oscillator 64 is mounted on spindle bearing block 43. The piston rod 63 of the oscillator contacts the spindle cross member 70, in its lower position, and by pulsing compressed air into air hose 65 the spindle 42 and hot solder iron 41 is vibrated vertically with a small amplitude, such as 0.254 mm (0.010 inch) at 10 cycles per second. Alternatively, a low frequency ultrasonic unit mounted below the work pieces 14 and 15 or on the solder tip 41 could be used to promote good solder flow.

It is desirable to feed out the solder wire 2 during the upward return of the spindle 42, and to perform the preforming operation immediately after the spindle returns to its normal up position. This sequence will provide the maximum cycle speed because the indexing of the work pieces 14 and 15 may proceed while the brush 37 and preform operations are under way. As soon as the new work pieces 14 and 15 are in position, the solder tip 41 and solder pellet 16 (which has been preformed on the previous cycle) may be lowered to proceed with the soldering.

The brushing operation, which occurs after each soldering is completed, removes contaminants, flux that adhers to the tip 41, and excess solder that remains on the surface of the solder tip 41. The removal of excess solder allows an accurate quantity of solder to be deposited on the work piece in preparation for the next cycle. The brushing operation occurs on every cycle. Removal of excess solder adhering on the solder tip 41 substantially reduces the erosion of the surface and the effects of amalgamation. Tests have indicated that solder tip life is as much as eight times greater when this technique is used.

Solvent flow is controlled by a solenoid-operated valve (not illustrated) similar to a conventional air valve. A momentary flow of solvent through the tube 38 during each cycle keeps the brush wetted and clean.

The solder tip cover 45 closes over the solder tip 41 at the end of each cycle. Nitrogen or other inert gases flowing through the tube 49 protects the hot soldering iron 41 from oxidizing and maintains a solder wetted out condition even after long intervals between cycles. It is understood that nitrogen gas may be conserved by stopping the flow during the machine cycling.

The apparatus of this invention may be a self-contained unit, designed to be used as part of a high production system or as a bench unit. When used as a bench unit, many applications requiring hand positioning of a part to be soldered, and locating the part to the exact position of the solder tip 41 in the down position, becomes slow and difficult without a suitable spotting device. A number of attempts on this type of operations involved the use of a movable spotting pointer, a partial lowering of the spindle, or an optical sight tube. However, all of these devices interferred with the ease and speed of hand positioning the work piece.

FIG. 3 shows a functional block diagram of a controller for controlling the time sequence of various operations. It may be embodied by any of the commercially available controllers which function to produce a plurality of individual control signals in time sequence, either under control of a self-contained timer, or signals from sensors indicating that necessary prior operations have been completed. On start up, unit 200 energizes air cylinder 56, to lower the cover 45, and unit 201 causes the cylinder 29 to raise the feed roll 5. Then unit 202 lowers the spindle and unit 204 starts the controller's timer 203. Adjustment means 205 allows the timing of the timer to be adjusted. Signals from the timer 203 control the time to pull back the solder (via unit 206) and subsequently to move the spindle back up by operation of unit 208. Then unit 212 feeds the solder forward to the preformer. Then unit 214 preforms the solder, and unit 216 brushes the soldering iron tip. Then unit 218 releases the feed roll 5, the solder down, after which the sequence is repeated, immediately, assuming a new joint to be soldered has been moved into position. This may be verified, for example, by a confirmation signal from the operator to restart the sequence.

For a short cycle, units 200, 210, 214, 216 and 218 are skipped, so that the remaining units, which operate in the same sequence, perform a more rapid operation.

The use of a high intensity, sharp focus light beam eliminates most of the hand positioning problems. When high intensity white light is difficult to differentiate from the environmental light, then a colored light beam, or a pulsating light could be employed instead. FIG. 1 shows such an arrangement using a light source 224 and a focusing lens 220, to focus a bright image of the light source at the location of the joint to be soldered. The operator can tell visually when the joint is in the correct position by observing whether the bright image is focussed on the joint.

It is apparent that the air cylinder operated devices may, with additionalcomplexity, be replaced with mechanical linkages, cams and servo motors either partially or in entirety,

Other advantages of this invention are low maintenance, low cost of fabrication, light weight and compactness. The light weight is essential for a fast acting solder cycle.

## Claims

1. An automatic soldering apparatus comprising a soldering iron tip (41), a linkage (77, 81) for moving said soldering iron tip relative to a joint to be soldered, a source (1) of solder, a feeder block (22) for advancing a quantity of solder from said source of said joint through a solder guide (13), said solder comprising an elongate length of meltable material, a feed roll (5, 8) for retracting said solder towards said source after said tip has been lowered, whereby a quantity of solder is broken or melted from said source of solder, characterized in that the feeder block (22) is pivotally mounted to a frame (93) by a shaft (26) and is connected to an actuating lever (77) of the linkage (77, 81) with a tie rod (92) and a double acting air cylinder piston (79) is connected to the lever (77) by means of a pivot pin (78).

2. Apparatus according to claim 1, including adjustable timer means (203) for selecting the time interval between contact with said solder by said soldering iron tip (41), and retraction of said solder from said joint.

3. Apparatus according to claim 1, including stamping means (17, 18) juxtaposed with said source (1) of solder, said stamping means adapted to score said solder at a predetermined position relative to the end of said length of solder, whereby said score line represents a weakened portion of said solder and constitutes a heat barrier tending to insulate the solder source from the heat of said soldering iron tip (41).

4. Apparatus according to claim 1, wherein said double acting air cylinder piston (79) and said linkage (81) are for lowering said soldering iron tip (41) into proximity with said joint, whereby said soldering iron tip is lowered at a preset speed into juxtaposition with said joint and bears on said joint with a preset force.

5. Apparatus according to claim 4, including means (84) for allowing manual adjustment of the force with which said soldering iron tip (41) bears on said joint.

6. Apparatus according to claim 5, including an adjustable spring (85) for supplying said force.

7. Apparatus according to claim 1, including a two stage damper (59, 68), the first stage (59) of said damper slowing the initial travel of said soldering iron tip (41) until it comes into proximity with said joint, and said second stage (68) adapted to more greatly slow the speed of said soldering iron tip as it approaches the location of said joint.

8. Apparatus according to claim 7, including adjustment means (66) for regulating the final velocity of said soldering iron tip (41) as it approaches said joint.

9. Apparatus according to claim 1, including a vibrator (64) mechanically connected to said solder, whereby said solder is subjected to mechanical agitation during melting, connected to said linkage (77,81) for moving said soldering iron tip (41).

10. Apparatus according to claim 9, wherein said vibrator (64) is connected to said linkage (77, 81) for moving said soldering iron.

11. Apparatus according to claim 1, wherein said means (22) for advancing a quantity of solder comprises a rotational clutch mechanism having a rotatable disk (106), and a friction ring (107) selectively engaging said disk for selectively applying the energy of rotation of said disk to the advancement of said solder.

12. Apparatus according to claim 11, including lever means (101, 104) for clamping said friction ring (107) to said disk (106).

13. Apparatus according to claim 12, wherein said lever means (101, 104) incorporates an outwardly extending projection (103) for applying a clamping force to said friction ring (107).

14. Apparatus according to claim 13, including a plurality of levers (101, 104) extending outwardly from said friction ring (107) in opposite directions and means (105, 108) for bearing on said levers for engaging said clutch in forward and reverse directions.

15. Apparatus according to claim 14, including lever action means (101) for amplifying the force bearing on said levers.

16. Apparatus according to claim 1, including a close fitting guide tube (13) surrounding said length of solder (2), whereby the end of said length of solder is straightened as it is withdrawn from said joint.

17. Apparatus according to claim 1, including a control means comprising means (205) for selecting an adjustable time duration for upward and downward movement of said soldering iron tip (41), whereby a shortened time may be selected for upward movement of said soldering iron tip, and means (22) for advancing said quantity of solder during said spindle movement.

18. Apparatus according to claim 1, including means (37) for brushing said soldering iron tip (41) after each soldering operation.

19. Apparatus according to claim 18, including means (38) for periodically applying solvent to said brush.

20. Apparatus according to claim 1, wherein said moving means (22) for advancing a quantity of solder comprises a pivotally mounted feeder assembly having a pair of feed rolls (5, 8), the pivot axis (3) of said feeder assembly being located close to the feed rolls and within 50% of the distance from the feed rolls to said joint.

21. Apparatus according to claim 20, including actuating means (115, 116) connected with said linkage (77,81) for moving said soldering iron tip (41), whereby said quantity of solder (2) is advanced synchronously with movement of said soldering iron tip.

22. Apparatus according to claim 1, including means (17, 18) for preforming said quantity of solder (2) while said soldering iron tip (41) is in its position removed from said joint.

23. Apparatus according to claim 1, including a light source (224), and means (220) for focusing said light source at the position of said joint.

24. Apparatus according to claim 1, including means (49) for surrounding said soldering iron tip (41) with an inert gas.

25. Apparatus according to claim 1, wherein said means (22) for advancing a quantity of solder (2) comprises a pair of feed rollers (5,8), said feed rollers being comprised of elastic material, and including means (10, 29, 30) for cyclically opening and closing said rollers relative to said solder.

26. Apparatus according to claim 1, comprising a rotational clutch having a rotatable disk (106), a ring (107) concentrically surrounding said disk (107), a pair of levers (101, 104) extending radially from said ring, and means (113, 118) for selectively applying force to said levers tending to rotate said levers in opposite directions relative to the axis of rotation of said disk, whereby the sequence in which said levers are rotated controls the direction of rotation of said disk subsequent to clamping of said ring about said disk.


**Revendications**

1. Dispositif de soudage automatique, comprenant un embout de soudage en fer (41), une tringlerie (77,81) pour déplacer ledit embout en fer par rapport à un joint à souder, une source d'alimentation (1) de produit de soudage, un bloc d'amenée (22) pour faire avancer une certaine quantité de produit de soudage depuis ladite source audit joint, en passant par un guide de soudage (13), ledit produit à souder comprenant une longueur constituée de matériau fusible, un galet d'amenée (5,8) servant à effectuer la rétractation du produit à souder en direction de ladite source, après l'abaissement dudit embout, de manière qu'une certaine quantité de produit à souder soit détachée par rupture ou fusion de ladite source d'alimentation de produit à souder, caractérisé en ce que le bloc d'amenée (22) est monté pivotant sur un châssis (93), grâce à un arbre (26) et est relié à un levier d'actionnement (77) de la tringlerie (77,81), portant une tige de raccordement (92) et un piston de vérin pneumatique à double action (78) étant relié au levier (77) au moyen d'un axe de pivotement (78).

2. Dispositif selon la revendication 1, comprenant un moyen de chronométrage réglable (203) pour sélectionner l'intervalle de temps pendant lequel ledit produit de soudage est au contact dudit embout de soudage en fer (41) et la rétraction dudit support à distance dudit joint.

3. Dispositif selon la revendication 1, comprenant un moyen d'estampage (17,18), juxtaposé avec ladite source (1) de produit à souder, ledit moyen d'estampage étant adapter pour entailler ledit support en une position prédéterminée par rapport à l'extrémité de ladite longueur de produit à souder, de manière que ladite ligne d'entaillage représente une partie de moindre résistance dudit support et constitue une barrière thermique tendant à isoler la source de produit à souder de la chaleur dégagée par ledit embout de soudage en fer (41).

4. Dispositif selon la revendication 1, dans lequel ledit piston de vérin pneumatique à double action (79) et ladite tringlerie (81) sont destinés à l'abaissement dudit embout de soudage en fer (41), à proximité dudit joint, de manière à ce que ledit embout de soudage en fer soit abaissé à une vitesse prédéterminée en juxtaposition avec ledit joint et porte sur ledit joint avec une force prédéterminée.

5. Dispositif selon la revendication 4, comprenant des moyens (84) pour permettre un réglage manuel de la force avec laquelle ledit embout de soudage en fer (41) porte sur ledit joint.

6. Dispositif selon la revendication 5, comprenant un ressort réglable (85) pour appliquer ladite force.

7. Dispositif selon la revendication 1, comprenant un amortisseur à deux étages (59,68), le premier étage (59) dudit amortisseur ralentissant le déplacement initial dudit embout de soudage en fer (41) jusqu'à ce qu'il vienne à proximité dudit joint, et ledit second étage (68) étant adapté pour ralentir plus encore la vitesse dudit embout de soudage en fer lorsqu' il s'approche de l'emplacement dudit joint.

8. Dispositif selon la revendication 7, comprenant un moyen de réglage (6) pour régler la vitesse finale dudit embout de soudage en fer (41) lorsqu'il approche dudit joint.

9. Dispositif selon la revendication 1, comprenant un vibrateur (64) relié mécaniquement audit produit de soudage, de manière que ledit produit de soudage soit soumis à une agitation mécanique pendant la fusion, vibrateur relié à ladite tringlerie (77,81) pour déplacer ledit embout de soudage en fer (41).

10. Dispositif selon la revendication 9, dans lequel ledit vibrateur (64) est relié à ladite tringlerie (77,81) pour déplacer ledit fer de soudage.

11. Dispositif selon la revendication 9, dans lequel ledit moyen (22) pour faire avancer une certaine quantité de produit de soudage comprend un mécanisme rotatif à embrayage, présentant un disque tournant (106), et une bague de friction (107) s'engageant de façon sélective pour appliquer sélectivement l'énergie de rotation dudit disque et produire l'avancement dudit produit de soudage.

12. Dispositif selon la revendication 11, comprenant un système de levier (101,104) pour serrer ladite bague de friction (107) sur ledit disque (106).

13. Dispositif selon la revendication 12, dans lequel ledit système de levier (101,104) comprend une saillie orientée vers l'extérieur (103), pour appliquer une force de serrage à ladite bague de serrage (107).

14. Dispositif selon la revendication 13, comprenant une pluralité de leviers (101,104) s'étendant vers l'extérieur de ladite bague de friction (107), suivant des directions opposées, et des moyens (105,108) pour porter sur lesdits leviers, et venir en prise avec ledit embrayage en sens avant et arrière.

15. Dispositif selon la revendication 1, comprenant un moyen d'action de levier (101) servant à amplifier l'application d'une force sur lesdits leviers.

16. Dispositif selon la revendication 1, comprenant un tube de guidage monté à faible jeu (13), entourant ladite longueur de produit de soudage (2), de manière que l'extrémité de ladite longueur de produit à souder soit rendue rectiligne lorsqu'elle est séparée dudit joint.

17. Dispositif selon la revendication 1, comprenant un moyen de commande (205) pour sélectionner une durée réglable de déplacement en montée et descente dudit embout de soudage en fer (41), de manière à pouvoir choisir un temps raccourci pour le déplacement en montée dudit embout de soudage en fer, et un moyen (22) pour l'avancement de ladite quantité de produit de soudage pendant ledit déplacement de tige.

18. Dispositif selon la revendication 1, comprenant un moyen (37) pour brosser ledit embout de soudage en fer (41) après chaque opération de soudage.

19. Dispositif selon la revendication 18, comprenant un moyen (38) pour appliquer périodiquement un solvant sur ladite brosse.

20. Dispositif selon la revendication 1, dans lequel ledit moyen de déplacement (22) pour faire avancer le produit de soudage comprend un assemblage alimentateur pivotant comportant deux galets d'alimentation (5,8), l'axe de pivotement (3) dudit assemblage alimentateur étant situé près des galets d'alimentation et dans les limites de 50% de la distance entre les galets d'alimentation et ledit joint.

21. Dispositif selon la revendication 20, comprenant un moyen d'actionnement (115,116) relié à ladite tringlerie (77,81), pour déplacer ledit embout de soudage en fer (41), de manière que ladite quantité de produit de soudage (2) soit avancée de façon synchrone avec le mouvement dudit embout de soudage en fer.

22. Dispositif selon la revendication 1, comprenant un moyen (17,18) pour préformer ladite quantité de produit de soudage (2) pendant que ledit embout de soudage en fer (41) se trouve à sa position éloignée dudit joint.

23. Dispositif selon la revendication 1, comprenant une source lumineuse (224) et un moyen de focalisation de ladite source lumineuse à l'emplacement dudit joint.

24. Dispositif selon la revendication 1, comprenant un moyen (49) pour entourer ledit embout de soudage en fer (41) avec un gaz inerte.

25. Dispositif selon la revendication 1, dans lequel ledit moyen (22) pour faire avancer une certaine quantité de produit de soudage (2) comprend deux galets d'alimentation (5,8), lesdits galets d'alimentation étant en un matériau élastique, et comprenant un moyen (10,29,30) pour produire cycliquement l'ouverture et la fermeture desdits galets par rapport audit produit de soudage.

26. Dispositif selon la revendication 1, comprenant un embrayage rotatif présentant un disque tournant (106), une bague (107) entourant concentriquement ledit disque (107), deux leviers (101,104) s'étendant radialement depuis ladite bague, et des moyens (113,118) pour appliquer sélectivement une force auxdits leviers, tendant à les faire tourner en sens opposés par rapport à l'axe de rotation dudit disque, de façon que l'ordre dans lequel lesdits leviers tournent commande le sens de rotation dudit disque, à la suite du serrage de ladite bague autour dudit disque.

**Ansprüche**

1. Lötautomat mit einer Lötspitze (41), einer Verbindung (77, 81) zum Bewegen der Lötspitze relativ zu einem Lötpunkt, einer Lotquelle (1), einer Zuführungseinheit (22) zum Zuführen einer Menge von Lot aus der Quelle zu dem Punkt durch eine Lotführung (13), wobei das Lot einen länglichen Abschnitt von schmelzbarem Material aufweist, mit Führungsrollen (5, 8) zum Zurückziehen des Lots zu der Lotquelle, nachdem die Spitze abgesenkt worden ist, wobei eine Menge von Lot von der Lotquelle abgebrochen oder geschmolzen wird, dadurch gekennzeichnet, daß die Zuführungseinheit (22) über eine Welle 26 drehbar auf einem Rahmen (93) gelagert ist und mit einem Betätigungshebel (77) der Verbindung (77, 81) verbunden ist, wobei eine Zugstange (92) und ein doppelt wirkender Luftbetätigungszylinder (79) mit dem Hebel (77) über einen Drehzapfen (78) verbunden ist.

2. Lötapparat nach Anspruch 1, gekennzeichnet durch einstellbare Zeitmeßmittel (203) zum Auswählen des Zeitintervalls zwischen dem Kontakt zwischen dem Lot und der Lötspitze (51) und dem Zurückziehen des Lots von der Lötstelle.

3. Lötapparat nach Anspruch 1, gekennzeichnet durch in der Nähe der Lotquelle (1) angeordnete Preßmittel (17,18), die dazu vorgesehen sind, das Lot an einer vorbestimmten Engstelle relativ zum Ende des Lotstücks einzukerben, wobei die entstehende Kerbe einen geschwächten Bereich im Lot darstellt und eine Wärmeleitungsschranke bildet, um die Lotquelle von der Hitze der Lötspitze (41) zu isolieren.

4. Lötautomat nach Anspruch 1, bei dem der doppelt wirkende Luftbetätigungszylinder (79) und die Verbindung (81) zum Absenken der Lötspitze (41) in die Nähe des Lötpunktes vorgesehen sind, wobei die Lötspitze mit einer festgelegten Geschwindigkeit in die Nähe des Lötpunktes abgesenkt wird und mit einer festgelegten Kraft auf die Lötstelle wirkt.

5. Lötautomat nach Anspruch 4, gekennzeichnet durch Mittel (84) zum manuelle Einstellen der Kraft, mit der die Lötspitze (41) auf die Lötstelle wirkt.

6. Lötautomat nach Anspruch 5, gekennzeichnet durch eine einstellbare Feder (85) zum Unterstützen der Kraft.

7. Vorrichtung nach Anspruch 1, gekennzeichnet durch einen Zwei-Stufen-Dämpfer (59,68), dessen erste Stufe (59) den Anfangsweg der Lötspitze (41) verzögert, bis sie in unmittelbare Nähe des Lötpunktes gelangt und dessen zweite Stufe (68) dazu ausgelegt ist, die Annäherungsgeschwindigkeit der Lötspitze an den Lötpunkt weiter zu senken.

8. Lötautomat nach Anspruch 7, gekennzeichnet durch Mittel (66) zum Regeln der Endgeschwindigkeit der Lötspitze (41) beim Annähern an den Lötpunkt.

9. Lötautomat nach Anspruch 1, gekennzeichnet durch einen mit dem Lot mechanisch verbundenen Vibrator (64), durch den das Lot einer mechanischen Bewegung während des Schmelzens ausgesetzt wird, wobei der Vibrator mit der Verbindung (77,81) zum Bewegen der Lötspitze (41) verbunden ist.

10. Vorrichtung nach Anspruch 9, dadurch gekennzeichnet, daß der Vibrator (64) mit der Verbindung (77,81) zum Bewegen der Lötspitze verbunden ist.

11. Lötautomat nach Anspruch 1, dadurch gekennzeichnet, daß die Mittel (22) zum Zuführen einer Menge von Lot eine Wegkupplung aufweisen, die ihrerseits eine drehbare Scheibe (106) und einen Reibungsring (107) aufweist, der wahlweise an der Scheibe anliegen kann, um wahlweise die kinetische Energie in der Scheibe zum Zuführen des Lots zu nutzen.

12. Vorrichtung nach Anspruch 11, gekennzeichnet durch Hebelmittel (101, 104) zum Klammern des Reibungsrings (107) an die Scheibe (106).

13. Vorrichtung nach Anspruch 12, bei der die Hebelmittel (101, 104) eine sich auswärts erstreckende Verlängerung (103) aufweisen, um eine Klemmkraft auf den Reibungsring auszuüben.

14. Lötautomat nach Anspruch 13, gekennzeichnet durch eine Vielzahl von sich von dem Reibungsring (107) auswärts erstreckenden Hebel (101, 104) durch ein in die entgegengesetzten Richtung Erstrecken und durch Mittel (105, 108) zum Lagern der Hebel zum Einkuppeln der Kupplung in einer Vorwärts- und Gegenrichtung.

15. Lötautomat nach Anspruch 14, gekennzeichnet durch Hebelbetätigungsmittel (101) zum Verstärken der auf die Hebel ausgeübten Kraft.

16. Lötautomat nach Anspruch 1, gekennzeichnet durch eine engpassende Führungsröhre 13, die eine Länge des Lots (2) umgibt, wobei das Ende der Lotlänge begradigt wird, wenn es von der Lötstelle zurückgezogen wird.

17. Lötautomat nach Anspruch 1, gekennzeichnet durch Regelmittel mit Mitteln (205) zum Einstellen einer Zeitdauer für die Aufwärts- und Abwärtsbewegung der Lötspitze (41), wobei eine kürzere Zeit für die Aufwärtsbewegung der Lötspitze gewählt werden kann, und Mittel (22) zum Vorwärtsfördern einer Lotmenge während der Spindelbewegung.

18. Lötautomat nach Anspruch 1, gekennzeichnet durch Mittel (37) zum Abbürsten der Lötspitze (41) nach jedem Lötvorgang.

19. Lötautomat nach Anspruch 18, gekennzeichnet durch Mittel (38) zum regelmäßigen Aufbringen von Lösungsmitteln auf die Bürste.

20. Lötautomat nach Anspruch 1, bei dem die Mittel (22) zum Zuführen einer Menge an Lot, einen drehbar gelagerten Zuführungsmechanismus mit einem Paar von Führungsrollen (5, 8) aufweisen, wobei die Drehachse (3) des Zuführungsmechanismus in der Nähe der Führungsrollen und innerhalb von der Hälfte der Distanz zwischen den Führungsrollen und der Lötstelle angeordnet sind.

21. Lötautomat nach Anspruch 20, gekennzeichnet durch mit der Verbindung (77,81) verbundene Betätigungsmittel (115,116) zum Bewegen der Lötspitze (41), wobei die Lotmenge (2) gleichzeitig mit der Bewegung der Lötspitze vorwärts gefördert wird.

22. Lötautomat nach Anspruch 1, gekennzeichnet durch Mittel (17,18) zum Vorformen der Lotmenge (2), während die Lötspitze (41) in der von der Lötstelle entfernten Position verharrt.

23. Lötautomat nach Anspruch 1, gekennzeichnet durch eine Lichtquelle (224) und Mittel (220) zum Fokussieren der Lichtquelle auf die Lötstelle.

24. Vorrichtung nach Anspruch 1, gekennzeichnet durch Mittel (49) zum Umhüllen der Lötspitze (41) mit einem Inert-Gas.

25. Lötautomaten nach Anspruch 1, bei dem die Mittel (22) zum Zuführen einer Lotmenge (2) ein Paar von Führungsrollen aufweisen (5,8) und die Führungsrollen aus einem elastischen Material bestehen und Mittel (10, 29,30) zum zyklischen öffnen und Schließen der Rollen relativ zu dem Lot vorgesehen sind.

26. Lötautomat nach Anspruch 1, dadurch gekennzeichnet, daß die Drehkupplung eine drehbare Scheibe (106), einen die Scheibe (106) konzentrisch umgebenden Ring (107) und ein Paar von Hebeln (101,104) aufweist, wobei sich letztere radial von dem Ring weg erstrecken, sowie weiter Mittel (113,118) zum selektiven Aufbringen von Kraft auf die Hebel, wodurch sich die Hebel in entgegengesetzter Richtung relativ zu der Drehachse der Scheibe bewegen, wodurch der zeitliche Ablauf in der die Hebel gedreht werden die Drehrichtung der Scheibe in Abhängigkeit von Klammern des Rings um die Scheibe bestimmt.

# FIG. 1

FIG.2

FIG.3

START

200 — 56 DOWN

201 — 29 UP

202 — 81 DOWN

204 — START TIMER

203 TIMER

205 ADJUST

206 — REVERSE CLUTCH

208 — 81 UP

212 — FORM CLUTCH

214 — 52 OPERATES

216 — 32 OPERATES

218 — 29 DOWN

REPEAT FROM START

14